# EUROPÄISCHE PATENTSCHRIFT

(11) **EP 2 020 344 B1**
(45) Veröffentlichungstag und Bekanntmachung des Hinweises auf die Patenterteilung: **16.07.2014**
(21) Anmeldenummer: 07015275.6
(22) Anmeldetag: 03.08.2007
(51) Int. Cl.: B60R 21/232, B60R 21/2346, B60R 21/235, B60R 21/2342, B60R 21/233

(54) **Luftsack für Kraftfahrzeuge**
Airbag for motor vehicles
Poche d'air pour véhicules automobiles

(43) Veröffentlichungstag der Anmeldung: 04.02.2009
(73) Patentinhaber: Autoliv Development AB, 447 83 Vårgårda (SE)
(72) Erfinder: Guthke, Detlev, 58089 Hagen (DE); Maiwald, Helmut, 51515 Kürten (DE)
(74) Vertreter: Schön, Thilo

(56) Entgegenhaltungen:
- EP-A2- 1 179 454
- EP-A2- 1 288 085
- EP-A2- 1 291 248
- WO-A-02/00476
- WO-A1-2006/117121
- DE-A1- 19 939 618
- DE-U1-202005 001 182
- JP-A- 4 356 249
- US-A1- 2001 019 201
- US-A1- 2002 056 979
- US-A1- 2006 138 756

## Beschreibung

Die Erfindung betrifft einen Luftsack für Kraftfahrzeuge mit einer Luftsackhülle, die wenigstens eine Klebung aufweist, durch die Materiallagen der Luftsackhülle miteinander verklebt sind.

Bei derartigen Luftsäcken dienen die Klebungen beispielsweise dazu, zum einen die Luftsackhülle zu verschließen und zum anderen innerhalb der Luftsackhülle Kammern zu bilden, die strömungstechnisch weitgehend voneinander getrennt sind und an die zum Aufblasen des Luftsacks über einen Gasverteiler das von einem Gasgenerator bereitgestellte Gas verteilt wird.

Generell, d.h. unabhängig von dem jeweiligen Zweck der Klebung, geht an den Klebestellen der Abstand der Materiallagen gegen Null, was relativ hohe Belastungen der Klebestellen mit sich bringt. Um die Verklebung herstellungstechnisch möglichst einfach zu gestalten, liegen die Materiallagen im Bereich der Klebestellen einfach flächig aneinander an. Hierdurch ergibt sich beim Aufblasen des Luftsacks und bei aufgeblasenem Luftsack eine so genannte "peelende" Beanspruchung für die Klebestellen, die zu einem Lösen der Klebeverbindung - d.h. zu einer Trennung der miteinander verklebten Materiallagen entweder mit oder ohne Zerstörung einer oder beider Materiallagen - schon bei relativ geringen Belastungen führen kann. Zur Erhöhung der Belastbarkeit der Verbindungsstellen werden in der Praxis die Materiallagen der Luftsackhülle daher zusätzlich miteinander vernäht. Die Verklebungen werden also durch eine oder mehrere Nähte verstärkt oder gesichert. Im Zusammenhang mit zur Bildung von Kammern vorgesehenen Verbindungen der Materiallagen spricht man auch von so genannten "Abnähern", und zwar in Anspielung auf die die Materiallagen zusätzlich miteinander verbindenden Nähte. Durch die Kombination von Verkleben einerseits und Vernähen andererseits lassen sich die heutzutage an Luftsäcke gestellten Anforderungen insbesondere hinsichtlich der Belastbarkeit ohne weiteres erfüllen. Diese Anforderungen sind insbesondere durch die Aufblasbedingungen und dabei vor allem durch die Temperatur des beim Aufblasen in den Luftsack strömenden Gases und durch den beim Aufblasen herrschenden Gasdruck innerhalb des Luftsacks bestimmt. Von Nachteil sind bei den erwähnten bekannten Verbindungsarten allerdings die relativ hohen Fertigungskosten, die sich dadurch ergeben, dass mit dem Verkleben und dem Vernähen zwei unterschiedliche, annähernd kostengleiche Herstellungsschritte erforderlich sind.

Aufgabe der Erfindung ist es, einen möglichst kostengünstig herstellbaren Luftsack zu schaffen, der gleichzeitig allen sich in der Praxis stellenden Anforderungen genügt.

Die Lösung dieser Aufgabe erfolgt durch die Merkmale des Anspruchs 1.

Erfindungsgemäß ist vorgesehen, dass die Klebung linien- oder streifenförmig ausgebildet ist und derart verläuft, dass beim Aufblasen des Luftsacks und bei aufgeblasenem Luftsack auftretende Beanspruchungen der Klebung so über deren Länge verteilt sind, dass Beanspruchungsspitzen vermieden sind.

Ferner ist die Klebung eine Randklebung, durch die zum Verschließen der Luftsackhülle in Bereichen, die bei unaufgeblasenem Luftsack Randbereiche der ausgebreiteten Luftsackhülle sind, Materiallagen der Luftsackhülle miteinander verklebt sind.

Es ist weiter vorgesehen, dass die Luftsackhülle in eine Mehrzahl von Kammern unterteilt ist und einen zumindest teilweise in der Luftsackhülle befindlichen Gasverteiler umfasst, über den von einem Gas generator erzeugtes Gas zum Aufblasen des Luftsacks in die Kammern gelangen kann, wobei die Kammern durch wenigstens einen Abkleber voneinander getrennt sind, der eine linien- oder streifenförmige Trennklebung umfasst, die zwischen die Kammern begrenzenden Materiallagen der Luftsackhülle ausgebildet ist und sich zwischen zwei Bereichen erstreckt, die bei unaufgeblasenem Luftsack Randbereiche der ausgebreiteten Luftsackhülle sind.

Der Gasverteiler ist ferner in die Trennklebung mit einbezogen.

Die Erfindung macht sich die für den Fachmann nicht vorhersehbare Erkenntnis zunutze, dass es nicht die peelende Beanspruchung der Verklebungen an sich ist, die deren Belastbarkeit relativ niedrige Grenzen setzt, sondern dass die Belastbarkeit von nicht durch Nähte oder andere Maß-nahmen verstärkten oder gesicherten Verklebungen wesentlich erhöht ist, wenn die Klebungen einen geeigneten Verlauf aufweisen und z.B. sich von Rand zu Rand oder von Verbindungsbereich zu Verbindungsbereich (s.u.) erstrecken, d.h. nicht "mitten im Luftsack" oder - mit anderen Worten - nicht mit Abstand zu einem Randbereich oder einem Verbindungsbereich der Luftsackhülle enden, wie es z.B. bei bekannten Abnähern von in mehrere Kammern unterteilten Luftsäcken der Fall ist, um ein Überströmen des Gases von Kammer zu Kammer zu ermöglichen.

Es hat sich herausgestellt, dass z.B. durch sich von Rand zu Rand erstreckende Klebungen oder durch Klebungen, die sich zwischen Bereichen oder Stellen der Luftsackhülle erstrecken, an denen die Materiallagen der Luftsackhülle einstückig oder durch andere Mittel miteinander verbunden sind, Beanspruchungsspitzen oder Spannungsspitzen, die zu einer Reduzierung der Belastbarkeit der Verklebungen führen, vermieden werden können. Um im Fall eines Luftsacks mit mehreren Kammern, die durch eine oder mehrere Trennklebungen voneinander getrennt sind, trotzdem das Gas in die einzelnen Kammern gelangen zu lassen, kann ein zumindest teilweise innen liegender Gasverteiler vorgesehen sein. In dieser Weiterbildung der Erfindung werden folglich ein innen liegender Gasverteiler und eine oder mehrere "durchgehende", d.h. sich von Randbereich zu Randbereich oder von Verbindungsbereich zu Verbindungsbereich der Luftsackhülle erstreckende, Verklebungen miteinander kombiniert.

Es wurde gefunden, dass bei konsequenter Anwendung des erfindungsgemäßen Prinzips, Beanspruchungsspitzen zu vermeiden, auf zusätzliche Sicherungsnähte vollständig verzichtet werden kann. Alle erforderlichen Verbindungen zwischen den Materiallagen können somit durch Kleben realisiert werden. Dabei ist allerdings zu betonen, dass die Erfindung nicht auf ausschließlich Klebeverbindungen umfassende Luftsäcke beschränkt ist. Vielmehr umfasst die Erfindung z.B. auch solche Anordnungen, bei denen zusätzlich zu den Abklebem Nähte vorgesehen sind, insbesondere im Vergleich zu der Länge der Trennklebungen kurze Nähte, die an bestimmten Stellen der Luftsackhülle für eine zusätzliche Verstärkung bzw. Sicherung der Verklebung sorgen oder anderen Zwecken dienen können.

Ein Vorteil der durch die Erfindung gebotenen Möglichkeit, mit nahtfreien Verklebungen zu arbeiten, besteht darin, die Klebungen gezielt als "Solltrennstellen" auszubilden, an denen sich die Verbindung zwischen den Materiallagen kontrolliert löst, ohne dass die Materiallagen beschädigt werden und der Luftsack undicht wird, wenn Belastungen auftreten, die ein vorgegebenes Maß übersteigen. Wenn z.B. sichergestellt ist, dass eine die Luftsackhülle verschließende Randverklebung solchen Belastungen standhält, die zu einem Lösen einer oder mehrerer Trennklebungen führen, dann kann durch die erfindungsgemäße Ausgestaltung der Trennklebungen erreicht werden, dass bei einer übermäßigen Belastung sich die Trennklebungen lösen und somit der Luftsack einer solchen Belastung in kontrollierter Weise nachgeben kann, wobei die Rückhaltefunktion des Luftsacks aufrechterhalten bleibt. Eine übermäßige Belastung kann z.B. durch eine übermäßig hohe Temperatur und/oder einen übermäßig hohen Gasdruck bedingt sein, der bzw. dem die Trennklebungen beim Aufblasen durch das einströmende Gas ausgesetzt sind. Unter "Lösen der Klebung" ist hier zu verstehen, dass die miteinander verklebten Materiallagen nicht zerstört werden, sondern erhalten bleiben, d.h. dass gewissermaßen das Klebemedium sich löst bzw. auflöst bzw. auftrennt bzw. zerrissen wird. Auf diese Weise lässt sich ein kontrolliertes Trennen der zuvor miteinander verklebten Materiallagen erzielen.

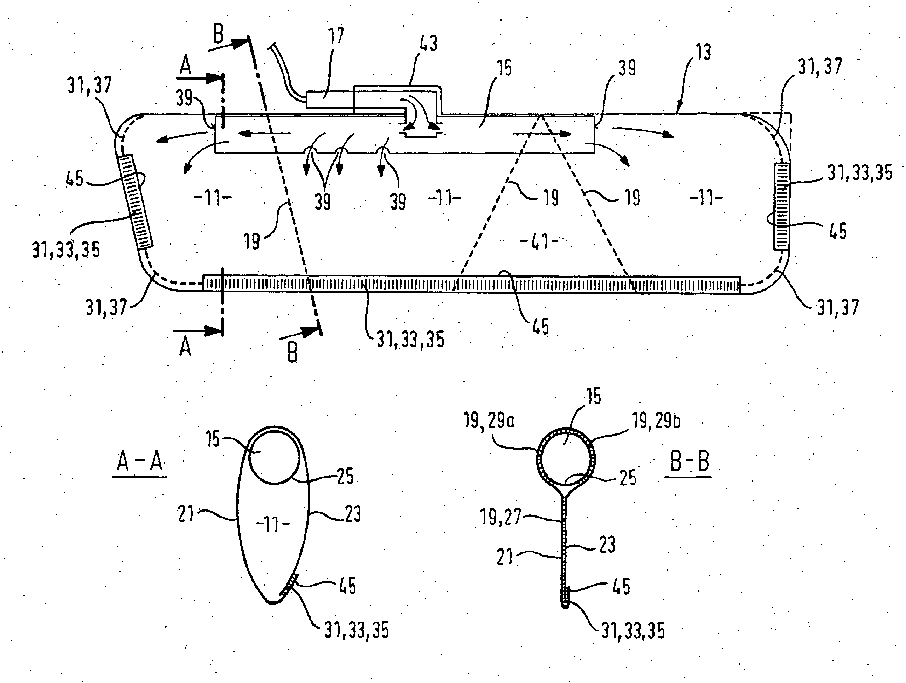

Mögliche Ausgestaltungen der Erfindung sind auch in den abhängigen Ansprüchen, der Beschreibung sowie der Zeichnung angegeben.

In einem möglichen Ausführungsbeispiel der Erfindung ist vorgesehen, dass die Klebung in Form einer geschlossenen Linie oder eines geschlossenen Streifens vorgesehen ist, oder dass die Klebung in Bereichen oder an Stellen der Luftsackhülle beginnt und endet, an denen die Materiallagen der Luftsackhülle miteinander verbunden sind. Hierdurch wird insbesondere vermieden, dass die Klebung "mitten im Luftsack" endet, also in Bereichen, an denen die Materiallagen der Luftsackhülle im unaufgeblasenen Zustand unverbunden auf- oder aneinander liegen. Die Klebungen sind folglich Linien oder Streifen, die "nirgends enden", d.h. es existiert kein "Endpunkt", an welchem Kräfte angreifen und übermäßige Beanspruchungen oder Spannungen für die Verklebung hervorrufen könnten. Die Klebungen verlaufen somit endpunktfrei bzw. ohne freien, d.h. ohne angreifbaren, Endpunkt.

Die Klebung kann eine Trennklebung sein, die einen zwei Kammern der Luftsackhülle voneinander trennenden Abkleber bildet und zwischen die Kammern begrenzenden Materiallagen der Luftsackhülle ausgebildet ist. Ein erfindungsgemäßer Luftsack kann sowohl eine oder mehrere derartige Trennklebungen als auch gleichzeitig eine oder mehrere Randklebungen aufweisen.

Die Trennklebung verläuft insbesondere geradlinig, wobei dies allerdings nicht zwingend ist. Eine nicht-geradlinig verlaufende Trennklebung weist allerdings vorzugsweise eine lediglich leichte Krümmung auf, und zwar im Sinne einer konsequenten Anwendung des Prinzips, Beanspruchungsspitzen zu vermeiden, wo immer dies möglich und sinnvoll ist.

Es kann vorgesehen sein, dass entlang der Trennklebung der Abstand zwischen den miteinander verklebten Materiallagen der Luftsackhülle auch beim Aufblasen des Luftsacks und bei aufgeblasenem Luftsack gegen Null geht.

Ferner kann vorgesehen sein, dass der Gasverteiler von wenigstens einer flexiblen und/oder biegsamen Materiallage gebildet ist.

Zur Bildung des Abklebers können die Kammern begrenzende Materiallagen der Luftsackhülle in wenigstens einem ersten Abschnitt untereinander und in wenigstens einem zweiten Abschnitt mit zumindest einer den Gasverteiler bildenden Materiallage verklebt sein.

Eine weitere Ausführungsform schlägt vor, dass die Trennklebung wenigstens eine Verzweigung aufweist, an der ein erster Abschnitt, entlang welchem die Kammern begrenzende Materiallagen untereinander verklebt sind, in einen zweiten Abschnitt übergeht, der wenigstens zwei Teilabschnitte umfasst, entlang welcher jeweils wenigstens eine die Kammern begrenzende Materiallage mit zumindest einer den Gasverteiler bildenden Materiallage verklebt ist.

Des Weiteren kann vorgesehen sein, dass im Bereich der Trennklebung die Materiallagen derart angeordnet sind, dass die Trennklebung beim Aufblasen des Luftsacks und bei aufgeblasenem Luftsack im Wesentlichen ausschließlich einer peelenden Belastung ausgesetzt ist.

Gemäß einem Ausführungsbeispiel sind zum Verschließen der Luftsackhülle in Bereichen, die bei unaufgeblasenem Luftsack Randbereiche der ausgebreiteten Luftsackhülle sind, Materiallagen der Luftsackhülle durch wenigstens eine Randklebung miteinander verklebt.

Die Randklebung kann insbesondere linien- oder streifenförmig verlaufen.

Es ist gemäß einer Weiterbildung möglich, dass im Bereich der Randklebung die Materiallagen zumindest bereichsweise derart angeordnet sind, dass die Randklebung beim Aufblasen des Luftsacks und bei aufgeblasenem Luftsack im Wesentlichen ausschließlich einer scherenden Belastung ausgesetzt ist.

Verklebungen, auf die Scherkräfte einwirken, können höheren Belastungen ausgesetzt werden als Verklebungen, die peelend belastet werden, bevor sich die Verklebung löst. In Verbindung mit einer scherend belasteten Randklebung können somit peelend belastete Trennklebungen eingesetzt werden, die in Abhängigkeit von erwarteten Belastungen so ausgelegt sind, dass sie sich kontrolliert lösen, bevor der Luftsack deshalb undicht wird, weil z.B. sich die Randklebung löst oder die Luftsackhülle an anderer Stelle der jeweils einwirkenden Belastung nachgibt.

Es kann vorgesehen sein, dass im Bereich der Randklebung die Materiallagen zumindest bereichsweise durch ein- oder mehrfaches Umklappen, Umlegen und/oder Falten wenigstens einer Materiallage in eine Scherbelastungskonfiguration gebracht sind.

Ferner ist gemäß einer Weiterbildung vorgesehen, dass die Luftsackhülle wenigstens zwei Materiallagen umfasst, die bei unaufgeblasenem Luftsack und ausgebreiteter Luftsackhülle mit einander zugewandten Innenseiten übereinander liegen, wobei zumindest bereichsweise zur Bildung der Randklebung ein Randbereich der einen Materiallage um einen Randbereich der anderen Materiallage umgeklappt, umgelegt und/oder gefaltet und mit seiner Innenseite mit der Außenseite der anderen Materiallage verklebt ist.

Ein derartiges "Umgreifen" oder "Umklammern" der einen Materiallage durch die andere Materiallage ist jedoch nicht zwingend. Alternativ kann zur Bildung der Randklebung ein Randbereich der einen Materiallage ohne Einbeziehung der anderen Materiallage umgeklappt, umgelegt und/oder gefaltet werden, so dass der Randbereich dann mit seiner Innenseite mit der Innenseite der gleichen Materiallage und mit seiner Außenseite mit der Innenseite der anderen Materiallage verklebt wird. Auch hierdurch entsteht eine scherend belastete Randklebung.

Nach einem weiteren Ausführungsbeispiel weist bei unaufgeblasenem Luftsack die ausgebreitete Luftsackhülle eine Grundform auf, deren Randbereich zumindest in von einer Randklebung verschlossenen Bereichen ausschließlich von geraden und/oder - mit Ausnahme von gegebenenfalls vorgesehenen Eckbereichen - leicht gekrümmten Abschnitten gebildet ist.

Eine solche Ausgestaltung stellt wiederum eine konsequente Anwendung des Prinzips dar, Beanspruchungsspitzen zu vermeiden, und ermöglicht somit eine weitere Vereinfachung und somit Kostenreduzierung bei der Herstellung des Luftsacks.

Ferner kann die Trennklebung derart ausgelegt sein, dass sich bei Überschreiten einer vorgebbaren, von den Aufblasbedingungen abhängigen Belastung die Verbindung zwischen den miteinander verklebten Materiallagen unter Beibehaltung der Gasdichtigkeit der Luftsackhülle löst.

Gemäß einem Ausführungsbeispiel ist der Gasverteiler randnah angeordnet.

Der Gasverteiler kann schlauch-, röhren- oder kanalförmig ausgebildet sein.

Des Weiteren kann der Gasverteiler mit einer Mehrzahl von Gasaustrittsöffnungen versehen sein, von denen wenigstens zwei nicht in die gleiche Kammer münden.

Die Erfindung betrifft außerdem ein Luftsackmodul für Kraftfahrzeuge mit wenigstens einem aufblasbaren Luftsack gemäß der Erfindung und zumindest einem Gasgenerator zum Aufblasen des Luftsacks.

Die Erfindung wird im Folgenden beispielhaft unter Bezugnahme auf die Zeichnung beschrieben, deren einzige Figur schematisch eine Ausführungsform eines erfindungsgemäßen Luftsackmoduls in einer Seitenansicht und zwei Querschnittsansichten zeigt.

Das Luftsackmodul umfasst eine im ausgebreiteten Zustand dargestellte Luftsackhülle 13 und einen Gasgenerator 17. Die Luftsackhülle 13 umfasst zwei Materiallagen 21, 23, die im Wesentlichen die gleiche Form und die gleiche Größe aufweisen und in einer nachstehend näher erläuterten Art und Weise zur Bildung der Luftsackhülle 13 miteinander verklebt sind.

Ferner ist ein innen liegender Gasverteiler 15 oder Kanal vorgesehen, der eine Materiallage 25 umfasst und in die Luftsackhülle 13 integriert ist oder einen Bestandteil der Luftsackhülle 13 bildet. Die Lagen 21, 23 der Luftsackhülle 13 einerseits und die Lage 25 des Gasverteilers 15 können aus dem gleichen Material oder aus unterschiedlichen Materialien bestehen. Der Gasverteiler 15 kann eine separate Komponente sein, die bei der Herstellung des Luftsacks mit den Materiallagen 21, 23 der Luftsackhülle verbunden wird. Alternativ kann der Gasverteiler 15 von einem Abschnitt wenigstens einer entsprechend zugeschnittenen Materiallage 21, 23 der Luftsackhülle 13 gebildet sein.

Der Gasverteiler 15 ist schlauchförmig ausgebildet und unmittelbar an einem Randbereich der Luftsackhülle 13 angeordnet, wie insbesondere aus den Schnittdarstellungen A-A und B-B hervorgeht. An diesem Randbereich ist außerhalb der Luftsackhülle 13 eine Art Tasche 43 ausgebildet, die von einer separaten Materiallage oder von wenigstens einer entsprechend zugeschnittenen Materiallage 21, 23 der Luftsackhülle 13 gebildet sein kann. Die Tasche 43 dient zur Aufnahme eines Gasgenerators 17, der über die Tasche 43 in den Gasverteiler 15 hineinragt. Der Gasgenerator 17 ist in diesem Ausführungsbeispiel schubneutral ausgebildet, d.h. aus dem innerhalb des Gasverteilers 15 befindlichen Ausstoßende des Gasgenerators 17 strömt das Gas in entgegengesetzte Richtungen in den Gasverteiler 15.

An dem in der Figur oberen Randbereich der Luftsackhülle 13, also an dem Randbereich, an dem hier der Gasverteiler 15 angeordnet ist, sind die Materiallagen 21, 23 der Luftsackhülle 13 miteinander verbunden, wobei dies entweder durch prinzipiell beliebige Verbindungsmittel erfolgen kann oder die Materiallagen 21, 23 auch einstückig miteinander verbunden sein können, d.h. die Luftsackhülle 13 insofern ein einziges Materialstück umfasst, das zur Bildung der Materiallagen 21, 23 am oberen Randbereich umgefaltet ist.

Der Gasverteiler 15 ist mit einer Mehrzahl von Gasaustrittsöffnungen 39 versehen, die so angeordnet sind, dass jede einer Mehrzahl von Kammern 11 des Luftsacks praktisch gleichzeitig mit Gas versorgt werden kann. In dem dargestellten Ausführungsbeispiel sind drei Kammern 11 vorgesehen, wobei die linke und die rechte Kammer 11 jeweils über eine der mit einer oder mehreren Gasaustrittsöffnungen 39 versehenen Stirnseiten des Gasverteilers 15 mit Gas gefüllt werden kann, während die mittlere Kammer 11 mit dem Gasverteiler 15 über mehrere Gasaustrittsöffnungen 39 in Verbindung steht, die in der Mantelfläche des Gasverteilers 15 ausgebildet sind. Ein zwischen der mittleren Kammer 11 und der rechten Kammer 11 vorgesehener Abschnitt des Luftsacks bildet einen passiven Bereich 41, der beim Aufblasen des Luftsacks nicht mit Gas gefüllt wird.

Die Bildung der Kammern 11 in der Luftsackhülle 13 und der Luftsackhülle 13 an sich erfolgt durch Verkleben der jeweiligen Materiallagen. Zum Verschließen der Luftsackhülle 13 ist im Randbereich eine Randklebung 31 vorgesehen. In den Eckbereichen 37 liegen die Materiallagen 21, 23 einfach flächig aufeinander und sind linien- oder streifenförmig miteinander verklebt. Diese Bereiche der Randklebung 31 sind folglich bei Belastung, d.h. beim Aufblasen des Luftsacks und bei aufgeblasenem Luftsack, einer peelenden Beanspruchung ausgesetzt. Die geradlinigen Bereiche 35 der Luftsackberandung sind auf andere Weise gebildet: Eine Materiallage 21 ist mit streifenförmigen Laschen 45 versehen, die zur Herstellung der Luftsackhülle 13 umgeklappt und so über die andere Materiallage 23 gefaltet werden, dass die Innenseiten der Laschen 45 auf der Außenseite der anderen Materiallage 23 liegen und mit dieser verklebt werden können. Die geradlinigen Bereiche 35 der Randklebung 31 sind folglich bei Belastung einer scherenden Beanspruchung ausgesetzt.

An dem in der Figur oberen Randbereich, an welchem sich innen der Gasverteiler 15 und außen - zumindest bereichsweise - die Tasche 43 für den Gasgenerator 17 befinden, sind die Materiallagen 21, 23 entweder durch beliebige Mittel miteinander verbunden, z.B. durch Verkleben und/oder Vernähen, oder die Materiallagen 21, 23 bilden einstückig miteinander ausgebildete Abschnitte einer einzigen Materiallage, die nach entsprechendem Zuschnitt zur Herstellung der Luftsackhülle 13 verwendet wird und an dem oberen Bereich gefaltet ist, um die beiden (Teil-)Lagen 21, 23 zu bilden.

Da in den Eckbereichen 37 bei Belastung die Beanspruchung der Randklebung 31 geringer ist als in den geradlinigen Bereichen 35, kann die Randklebung 31 aufgrund der in den geradlinigen Bereichen 35 vorgesehenen Scherbelastungskonfiguration vergleichsweise hohen Belastungen ausgesetzt werden, d.h. die Dichtigkeit der Luftsackhülle 13 ist auch bei relativ hohen Belastungen gewährleistet.

Wie die Figur zeigt, kann die Form oder Kontur der ausgebreiteten Luftsackhülle 13 so gewählt werden, dass mit Ausnahme der Eckbereiche 37 nur geradlinige oder schwach gekrümmte Bereiche 35 vorhanden sind, die in der vorstehend erläuterten Weise relativ einfach in eine Scherbelastungskonfiguration gebracht werden können. Durch eine geschickte Wahl der Luftsackkontur kann dessen Belastbarkeit folglich erhöht werden.

Zur Bildung der Kammern 11 der Luftsackhülle 13 sind mehrere linien-oder streifenförmige Trennklebungen 19 vorgesehen, an denen die Materiallagen 21, 23 der Luftsackhülle 13 - wie in den Eckbereichen 37 - lediglich aufeinander liegend miteinander verklebt und die folglich bei Belastung einer peelenden Beanspruchung ausgesetzt sind. Die Trennklebungen 19 erstrecken sich unter Einbeziehung des Gasverteilers 15 von Randbereich zu Randbereich, so dass keine innerhalb des Luftsackvolumens endenden Abkleber vorhanden sind und ein Überströmen von Gas von Kammer 11 zu Kammer 11 nicht möglich ist. Das Gas kann folglich nur über den Gasverteiler 15 in die Kammern 11 und deshalb nicht in den passiven Bereich 41 der Luftsackhülle 15 gelangen, der somit nicht mit aufgeblasen wird.

Wie die Querschnittsdarstellung B-B zeigt, sind in einem ersten Abschnitt 27 der Trennklebungen 19 jeweils die beiden Materiallagen 21, 23 der Luftsackhülle 13 direkt miteinander verklebt, so dass der gegenseitige Abstand der Materiallagen 21, 23 an den Abklebern gegen Null geht. Ein zweiter Abschnitt der Trennklebungen 19 umfasst jeweils zwei Teilabschnitte 29a, 29b, in dem jeweils eine der Materiallagen 21, 23 der Luftsackhülle 13 mit der Materiallage 25 des Gasverteilers 15 verbunden ist. Die Trennklebungen 19 weisen folglich am Gasverteiler 15 eine Verzweigung auf, wobei sich herausgestellt hat, dass die Belastbarkeit der Trennklebungen 19 im Bereich der Verzweigungen deutlich größer ist als ursprünglich erwartet.

Die bei Belastung einer peelenden Beanspruchung ausgesetzten Trennklebungen 19 sind weniger belastbar als die Randklebung 31. Wenn sich die Trennklebungen 19 aufgrund einer ein bestimmtes Maß übersteigenden Belastung ohne Zerstörung oder Beschädigung der Materiallagen lösen, bleibt der Luftsack gleichwohl gasdicht und somit - allerdings ohne die ursprüngliche Kammerunterteilung - grundsätzlich funktionsfähig, da die Randklebung 31 der Belastung weiterhin standhält und somit weiterhin ein schützendes Gasvolumen zur Verfügung steht. Wie eingangs bereits erwähnt, kann hierdurch ein kontrolliertes Nachgeben des Luftsacks realisiert werden, indem die Trennklebungen 19 gewissermaßen als "Solltrennstellen" ausgelegt werden.

In dem hier dargestellten Ausführungsbeispiel sind die Materiallagen 21, 23 in den Eckbereichen 37 abgerundet, so dass sie im Wesentlichen dem Verlauf der Randklebung 31 folgen. Außerhalb der Randklebung 31 verbleibt folglich wenig Material. Abweichend von dieser Ausgestaltung können die Eckbereiche 37 eckig ausgeführt sein, wie es in der Figur am Beispiel der rechten oberen Ecke durch eine gestrichelte Linie angedeutet ist. Das zusätzliche Material, d.h. die hierdurch entstehende Materiallasche, kann zur Anbindung des Luftsacks im Fahrzeug genutzt werden, beispielsweise für Abspannleinen oder andere Befestigungseinrichtungen.

Des Weiteren ist zu erwähnen, dass der Luftsack hier als ein so genanntes Mitten-Modul dargestellt ist, bei dem das Aufblasen durch den Gasgenerator 17 in einem mittleren Bereich - betrachtet in einer Richtung von vorne nach hinten - erfolgt. Alternativ kann es sich bei dem Luftsack auch um ein so genanntes Endfill-Modul handeln, bei dem der Gasgenerator zumindest geringfügig entfernt vom Luftsack am Ende einer sich längs des Luftsacks erstreckenden und mit Gasaustrittsöffnungen versehenen Gasleitung z.B. in Form einer Rohres oder eines Schlauches angeordnet ist.

In einer weiteren Alternative zu der dargestellten Ausführungsform kann der Luftsack an seiner dem Gasverteiler bzw. Kanal 15 gegenüber liegenden Längsseite, also in der Figur unteren Seite, ebenfalls mit einem oder mehreren innen liegenden Kanälen versehen sein, die ein Überströmen von Gas von einer Kammer 11 in eine benachbarte Kammer 11 ermöglicht. Insbesondere sind jeweils zwei benachbarte Kammern 11 durch einen Kanal miteinander verbunden. Dies ermöglicht einen Druckausgleich zwischen den Kammern 11. Derartige Druckausgleichskanäle entsprechen bevorzugt im Wesentlichen dem Gasverteiler 15, d.h. bestehen aus wenigstens einer flexiblen und/oder biegsamen Materiallage und sind insbesondere als Schlauch ausgebildet. Der Verlauf der Trennklebungen 19 im Bereich der Druckausgleichskanäle entspricht dann bevorzugt dem Verlauf der Trennklebungen 19 im Bereich des Gasverteilers 15, d.h. die Trennklebungen 19 verlaufen weiterhin von Rand zu Rand.

### Bezugszeichenliste

- 11: Kammer
- 13: Luftsackhülle
- 15: Gasverteiler, Kanal
- 17: Gasgenerator
- 19: Trennklebung
- 21: Materiallage der Luftsackhülle
- 23: Materiallage der Luftsackhülle
- 25: Materiallage des Gasverteilers
- 27: erster Abschnitt der Trennklebung
- 29a: Teilabschnitt des zweiten Abschnitts der Trennklebung
- 29b: Teilabschnitt des zweiten Abschnitts der Trennklebung
- 31: Randklebung
- 33: Scherbelastungskonfiguration
- 35: gerader Abschnitt des Randbereiches
- 37: Eckbereich
- 39: Gasaustrittsöffnung
- 41: passiver Bereich
- 43: Tasche
- 45: Lasche

## Patentansprüche

1. Luftsack für Kraftfahrzeuge
mit einer zwei Materiallagen (21, 23) aufweisenden Luftsackhülle (13), wobei die Luftsackhülle ein mit Gas aufblasbares Inneres des Luftsacks derart umschließt, dass sie das mit Gas aufblasbare Innere von der Umgebung trennt, wobei
die Luftsackhülle wenigstens eine linien- oder streifenförmig ausgebildete, nahtfreie Klebung (19, 31) aufweist, durch die die beiden Materiallagen der Luftsackhülle (13) miteinander verklebt sind,
**dadurch gekennzeichnet, dass**
die Luftsackhülle (13) in eine Mehrzahl von Kammern (11) unterteilt ist und einen zumindest teilweise in der Luftsackhülle (13) befindlichen Gasverteiler (15) umfasst, über den von einem Gasgenerator (17) erzeugtes Gas zum Aufblasen des Luftsacks in die Kammern (11) gelangen kann,
wobei die Kammern (11) durch wenigstens einen Abkleber voneinander getrennt sind, der die linien- oder streifenförmige Trennklebung (19) umfasst, die zwischen die Kammern (11) begrenzenden Materiallagen (21, 23) der Luftsackhülle (13) ausgebildet ist und sich zwischen zwei Bereichen erstreckt, die bei unaufgeblasenem Luftsack Randbereiche der ausgebreiteten Luftsackhülle (13) sind,
und dass der Gasverteiler (15) in die Trennklebung (19) mit einbezogen ist.

2. Luftsack nach Anspruch 1,
**dadurch gekennzeichnet,**
**dass** die Klebung (19, 31) endpunktfrei oder ohne freien Endpunkt verläuft.

3. Luftsack nach Anspruch 1 oder 2,
**dadurch gekennzeichnet,**
**dass** die Klebung (19, 31) in Form einer geschlossenen Linie oder eines geschlossenen Streifens vorgesehen ist, oder dass die Klebung (19, 31) in Bereichen oder an Stellen der Luftsackhülle (13) beginnt und endet, an denen die Materiallagen (21, 23) der Luftsackhülle (13), insbesondere durch Verbindungsmittel oder einstückig, miteinander verbunden sind.

4. Luftsack nach einem der vorhergehenden Ansprüche,
**dadurch gekennzeichnet,**
**dass** die Klebung eine Trennklebung (19) ist, die einen zwei Kammern (11) der Luftsackhülle (13) voneinander trennenden Abkleber bildet und zwischen die Kammern (11) begrenzenden Materiallagen (21, 23) der Luftsackhülle (13) ausgebildet ist.

5. Luftsack nach Anspruch 1,
**dadurch gekennzeichnet,**
**dass** entlang der Trennklebung (19) der Abstand zwischen den miteinander verklebten Materiallagen (21, 23) der Luftsackhülle (13) auch beim Aufblasen des Luftsacks und bei aufgeblasenem Luftsack gegen Null geht.

6. Luftsack nach einem der Ansprüche 1 bis 5,
**dadurch gekennzeichnet,**
**dass** der Gasverteiler (15) von wenigstens einer flexiblen und/oder biegsamen Materiallage (25) gebildet ist.

7. Luftsack nach einem der Ansprüche 1 bis 6,
**dadurch gekennzeichnet,**
**dass** zur Bildung des Abklebers die Kammern (11) begrenzende Materiallagen (21, 23) der Luftsackhülle (13) in wenigstens einem ersten Abschnitt (27) untereinander und in wenigstens einem zweiten Abschnitt (29a, 29b) mit zumindest einer den Gasverteiler (15) bildenden Materiallage (25) verklebt sind.

8. Luftsack nach einem der Ansprüche 1 bis 7,
**dadurch gekennzeichnet,**
**dass** die Trennklebung (19) wenigstens eine Verzweigung aufweist, an der ein erster Abschnitt (27), entlang welchem die Kammern (11) begrenzende Materiallagen (21, 23) untereinander verklebt sind, in einen zweiten Abschnitt übergeht, der wenigstens zwei Teilabschnitte (29a, 29b) umfasst, entlang welcher jeweils wenigstens eine die Kammern (11) begrenzende Materiallage (21, 23) mit zumindest einer den Gasverteiler (15) bildenden Materiallage (25) verklebt ist.

9. Luftsack nach einem der Ansprüche 4 bis 8,
**dadurch gekennzeichnet,**
**dass** im Bereich der Trennklebung (19) die Materiallagen (21, 23, 25) derart angeordnet sind, dass die Trennklebung (19) beim Aufblasen des Luftsacks und bei aufgeblasenem Luftsack im Wesentlichen ausschließlich einer peelenden Belastung ausgesetzt ist.

10. Luftsack nach einem der vorhergehenden Ansprüche,
**dadurch gekennzeichnet,**
**dass** zum Verschließen der Luftsackhülle (13) in Bereichen, die bei unaufgeblasenem Luftsack Randbereiche der ausgebreiteten Luftsackhülle (13) sind, Materiallagen (21, 23) der Luftsackhülle (13) durch wenigstens eine Randklebung (31) miteinander verklebt sind.

11. Luftsack nach Anspruch 10,
**dadurch gekennzeichnet,**
**dass** die Randklebung (31) linien- oder streifenförmig verläuft.

12. Luftsack nach Anspruch 10 oder 11,
**dadurch gekennzeichnet,**
**dass** im Bereich der Randklebung (31) die Materiallagen (21, 23) zumindest bereichsweise derart angeordnet sind, dass die Randklebung (31) beim Aufblasen des Luftsacks und bei aufgeblasenem Luftsack im Wesentlichen ausschließlich einer scherenden Belastung ausgesetzt ist.

13. Luftsack nach einem der Ansprüche 10 bis 12,
**dadurch gekennzeichnet,**
**dass** im Bereich der Randklebung (31) die Materiallagen zumindest bereichsweise durch ein- oder mehrfaches Umklappen, Umlegen und/oder Falten wenigstens einer Materiallage in eine Scherbelastungskonfiguration (33) gebracht sind.

14. Luftsack nach einem der Ansprüche 10 bis 13,
**dadurch gekennzeichnet,**
**dass** die Luftsackhülle (13) wenigstens zwei Materiallagen (21, 23) umfasst, die bei unaufgeblasenem Luftsack und ausgebreiteter Luftsackhülle (13) mit einander zugewandten Innenseiten übereinander liegen, wobei zumindest bereichsweise zur Bildung der Randklebung (31) ein Randbereich der einen Materiallage (21) um einen Randbereich der anderen Materiallage (23) umgeklappt, umgelegt und/oder gefaltet und mit seiner Innenseite mit der Außenseite der anderen Materiallage (23) verklebt ist.

15. Luftsack nach einem der vorhergehenden Ansprüche,
**dadurch gekennzeichnet,**
**dass** bei unaufgeblasenem Luftsack die ausgebreitete Luftsackhülle (13) eine Grundform aufweist, deren Randbereich zumindest in von einer Randklebung verschlossenen Bereichen ausschließlich von geraden und/oder- mit Ausnahme von gegebenenfalls vorgesehenen Eckbereichen (37) - leicht gekrümmten Abschnitten (35) gebildet ist.

16. Luftsack nach einem der Ansprüche 4 bis 15,
**dadurch gekennzeichnet,**
**dass** die Trennklebung (19) derart ausgelegt ist, dass sich bei Überschreiten einer vorgebbaren, von den Aufblasbedingungen abhängigen Belastung die Verbindung zwischen den miteinander verklebten Materiallagen (21, 23) unter Beibehaltung der Gasdichtigkeit der Luftsackhülle (13) löst, insbesondere ohne Zerstörung oder Beschädigung der Materiallagen (21, 23).

17. Luftsack nach einem der Ansprüche 1 bis 16,
**dadurch gekennzeichnet,**
**dass** der Gasverteiler (15) randnah angeordnet ist.

18. Luftsack nach einem der Ansprüche 1 bis 17,
**dadurch gekennzeichnet,**
**. dass** der Gasverteiler (15) schlauch-, röhren- oder kanalförmig ausgebildet ist.

19. Luftsack nach einem der Ansprüche 1 bis 18,
**dadurch gekennzeichnet,**
**dass** der Gasverteiler (15) mit einer Mehrzahl von Gasaustrittsöffnungen (39) versehen ist, von denen wenigstens zwei nicht in die gleiche Kammer (11) münden.

20. Luftsackmodul für Kraftfahrzeuge
mit wenigstens einem aufblasbaren Luftsack nach einem der vorhergehenden Ansprüche und zumindest einem Gasgenerator (17) zum Aufblasen des Luftsacks.

## Claims

1. An airbag for motor vehicles
with an airbag cover (13) having two material layers (21, 23), wherein the airbag cover encloses an interior of the airbag inflatable with gas such that it separates the interior inflatable with gas from the surroundings, wherein the airbag cover has at least one seam-free adhesive bond (19, 31) configured in the shape of a line or strip by means of which the two material layers of the airbag cover (13) are adhered to each other,
**characterized in that**
the airbag cover (13) is divided into a plurality of chambers (11), and comprises a gas distributor (15) that is at least partially disposed in the airbag cover (13), by means of which gas generated by a gas generator (17) can enter the chambers (11) to inflate the airbag, wherein the chambers (11) are divided by at least one bond separator that comprises the linear or strip-shaped adhesive separation bond (19) that is formed between the material layers (21, 23) of the air bag cover (13) delimiting the two chambers (11) and extending between two areas which are peripheral areas of the spread-out airbag cover (13),
and the gas distributor (15) is included in the separation bond (19).

2. The airbag according to claim 1,
**characterised in that**
the bond (19, 31) extends without an end point, or without a free end point.

3. The airbag according to claim 1 or 2,
**characterized in that**
the bond (19, 31) is provided in the form of a continuous line or a continuous strip, or the bond (19, 31) starts and ends in areas or at locations of the airbag cover (13) at which the material layers (21, 23) of the airbag cover (13) are connected to each other, in particular by connecting means, or integrally.

4. The airbag according to one of the prior claims,
**characterized in that**
the bond is a separation bond (19) that forms an adhesive area dividing two chambers (11) of the airbag cover (13) and is formed between the material layers (21, 23) of the airbag cover (13) delimiting the chambers (11).

5. The airbag according to claim 1,
**characterized in that**
along the separation bond (19), the distance between the material layers (21, 23) of the airbag cover (13) adhered to each other approaches zero even upon inflating the airbag and when the airbag is inflated.

6. The airbag according to one of claims 1 to 5,
**characterized in that**
the gas distributor (15) is formed by at least one flexible and/or pliable material layer (25).

7. The airbag according to one of claims 1 to 6,
**characterized in that**
to form the bond separator, the material layers (21, 23) of the airbag cover (13) delimiting the chambers (11) are adhered to each other in at least one first section (27), and to at least one of the material layers (25) forming the gas distributor (15) in at least one second section (29a, 29b).

8. The airbag according to one of claims 1 to 7,
**characterized in that**
the separation bond (19) has at least one branch at which a first section (27) along which the material layers (21, 23) delimiting the chambers (11) are adhered to each other transitions into a second section that comprises at least two subsections (29a, 29b), along which at least one material layer (21, 23) delimiting the chambers (11) is adhered to at least one material layer (25) forming the gas distributor (15).

9. The airbag according to one of claims 4 to 8,
**characterized in that**
in the area of the separation bond (19), the material layers (21, 23, 25) are arranged such that the separation bond (19) is subject to a substantially exclusively peeling load upon inflation of the airbag and when the airbag has been inflated.

10. The airbag according to one of the prior claims,
**characterized in that**
material layers (21, 23) of the airbag cover (13) are adhered to each other by at least one edge bond (31) in order to seal the airbag cover (13) in areas that are edge areas of the spread-out airbag cover (13) when the airbag is uninflated.

11. The airbag according to claim 10,
**characterized in that**
the edge bond (31) runs in the shape of a line or strip.

12. The airbag according to claim 10 or 11,
**characterized in that**
in the area of the edge bond (31), the material layers (21, 23) are arranged at least in areas such that the edge bond (31) is exposed to a substantially shearing load upon inflating the airbag and when the airbag has been inflated.

13. The airbag according to one of claims 10 to 12,
**characterized in that**
in the area of the edge bond (31), the material layers are brought into a shear load configuration (33), at least in areas, by single or multiple turning down, turning over, and/or folding.

14. The airbag according to one of claims 10 to 13,
**characterized in that**
the airbag cover (13) comprises at least two material layers (21, 23) that, when the airbag is uninflated and the airbag cover (13) is spread out, lie on each other with facing interiors, wherein to form the edge bond (31), an edge area of one material layer (21) is turned down, turned over and/or folded around an edge area of the other material layer (23), at least in areas, and its interior is adhered to the exterior of the other material layer (23).

15. The airbag according to one of the prior claims,
**characterized in that**
when the airbag is uninflated, the spread-out airbag cover (13) has a basic shape with an edge area that is exclusively formed by a straight and/or - with the exception of corner areas (37) that may be provided - slightly curved sections (35), at least in areas enclosed by an edge bond.

16. The airbag according to one of claims 4 to 15,
**characterized in that**
the separation bond (19) is designed such that, when a specifiable load depending on the inflation conditions is exceeded, the connection between the material layers (21, 23) adhered to each other releases while retaining the gas tightness of the airbag cover (13), in particular without destroying or damaging the material layers (21, 23).

17. The airbag according to one of claims 1 to 16,
**characterized in that**
the gas distributor (15) is arranged close to the edge.

18. The airbag according to one of claims 1 to 17,
**characterized in that**
the gas distributor (15) is designed in the shape of a hose, tube, or channel.

19. The airbag according to one of claims 1 to 18,
**characterized in that**
the gas distributor (15) is provided with a plurality of gas exit openings (39) of which at least two do not terminate in the same chamber (11).

20. An airbag module for motor vehicles,
with at least one inflatable airbag according to one of the prior claims, and at least one gas generator (17) to inflate the airbag.

## Revendications

1. Coussin gonflable pour véhicules automobiles
doté d'une enveloppe de coussin gonflable (13) présentant deux couches de matériau (21, 23), l'enveloppe de coussin gonflable entourant un espace intérieur du coussin gonflable pouvant être gonflé par gaz de manière à séparer de l'environnement l'espace intérieur gonflable par gaz,
l'enveloppe de coussin gonflable présentant au moins un collage (19, 31) sans couture conçu sous forme de ligne ou de bande et permettant de coller l'une à l'autre les deux couches de matériau de l'enveloppe de coussin gonflable (13),
**caractérisé en ce que**
l'enveloppe de coussin gonflable (13) est divisée en une pluralité de chambres (11) et comprend un diffuseur de gaz (15) se trouvant au moins partiellement dans l'enveloppe de coussin gonflable (13) et permettant à un gaz généré par un générateur de gaz (17) de parvenir dans les chambres (11) pour gonfler le coussin gonflable,
les chambres (11) étant séparées les unes des autres par au moins une languette qui comprend le collage de séparation (19) sous forme de ligne ou de bande entre les couches de matériau (21, 23) de l'enveloppe du coussin gonflable (13) délimitant les chambres (11) et qui s'étend entre deux zones constituant des zones de bord de l'enveloppe de coussin gonflable déployée lorsque le coussin gonflable est non gonflé,
et **en ce que** le diffuseur de gaz (15) est intégré dans le collage de séparation (19).

2. Coussin gonflable selon la revendication 1,
**caractérisé en ce que**
le collage (19, 31) est réalisé sans point final ou sans point final libre.

3. Coussin gonflable selon la revendication 1 ou 2,
**caractérisé en ce que**
le collage (19, 31) est prévu sous la forme d'une ligne fermée ou d'une bande fermée ou **en ce que** le collage (19, 31) commence et finit dans des zones ou à des endroits de l'enveloppe de coussin gonflable (13) où les couches de matériau (21, 23) de l'enveloppe de coussin gonflable (13) sont reliées l'une à l'autre, notamment par des moyens de fixation ou d'un seul tenant.

4. Coussin gonflable selon l'une quelconque des revendications précédentes,
**caractérisé en ce que**
le collage est un collage de séparation (19) qui forme une languette séparant l'une de l'autre les deux chambres (11) de l'enveloppe de coussin gonflable (13) et qui est conçu entre les couches de matériau (21, 23) de l'enveloppe de coussin gonflable (13) qui délimitent les chambres (11).

5. Coussin gonflable selon la revendication 1,
**caractérisé en ce que**
le long du collage de séparation (19), l'écart entre les couches de matériau (21, 23) de l'enveloppe de coussin gonflable (13) collées l'une à l'autre est proche de zéro, même lors du gonflage du coussin gonflable ou une fois le coussin gonflable gonflé.

6. Coussin gonflable selon l'une quelconque des revendications 1 à 5,
**caractérisé en ce que**
le diffuseur de gaz (15) est formé par au moins une couche de matériau (25) flexible et/ou souple.

7. Coussin gonflable selon l'une quelconque des revendications 1 à 6,
**caractérisé en ce que**
pour former la languette, les couches de matériau (21, 23) de l'enveloppe de coussin gonflable (13) délimitant les chambres (11) sont collées les unes aux autres dans au moins une première section (27) et, dans au moins une deuxième section (29a, 29b), à au moins une couche de matériau (25) formant le diffuseur de gaz (15).

8. Coussin gonflable selon l'une quelconque des revendications 1 à 7,
**caractérisé en ce que**
le collage de séparation (19) présente au moins une ramification au niveau de laquelle une première section (27), le long de laquelle les couches de matériau (21, 23) délimitant les chambres (11) sont collées l'une à l'autre, passe à une deuxième section qui comprend au moins deux sections partielles (29a, 29b), le long desquelles au moins une couche de matériau (21, 23) respective délimitant les chambres (11) est collée à au moins une couche de matériau (25) formant le diffuseur de gaz (15).

9. Coussin gonflable selon l'une quelconque des revendications 4 à 8,
**caractérisé en ce que**
dans la zone du collage de séparation (19), les couches de matériau (21, 23, 25) sont disposées de manière à ce que le collage de séparation (19) ne soit essentiellement exposé qu'à une charge exfoliante lors du gonflage du coussin gonflable et une fois le coussin gonflable gonflé.

10. Coussin gonflable selon l'une quelconque des revendications précédentes,
**caractérisé en ce que**
pour fermer l'enveloppe de coussin gonflable (13) dans des zones constituant des zones de bords de l'enveloppe de coussin gonflable (13) déployée, les couches de matériau (21, 23) de l'enveloppe de coussin gonflable (13) sont collées l'une à l'autre par au moins un collage de bordure (31).

11. Coussin gonflable selon la revendication 10,
**caractérisé en ce que**
le collage de bordure (31) s'étend sous forme de ligne ou de bande.

12. Coussin gonflable selon la revendication 10 ou 11,
**caractérisé en ce que**
dans la zone du collage de bordure (31), les couches de matériau (21, 23) sont disposées au moins par zone de manière à ce que le collage de bordure (31) ne soit essentiellement exposé qu'à une charge de cisaillement lors du gonflage du coussin gonflable ou une fois le coussin gonflable gonflé.

13. Coussin gonflable selon l'une quelconque des revendications 10 à 12,
**caractérisé en ce que**
les couches de matériau dans la zone du collage de bordure (31) sont placées au moins par zone dans une configuration de charge de cisaillement (33) en pliant, en pivotant et/ou en rabattant une ou plusieurs fois au moins une couche de matériau.

14. Coussin gonflable selon l'une quelconque des revendications 10 à 13,
**caractérisé en ce que**
l'enveloppe de coussin gonflable (13) comprend au moins deux couches de matériau (21, 23) se trouvant l'une sur l'autre lorsque le coussin gonflable n'est pas gonflé et que l'enveloppe de coussin gonflable (13) est déployée avec les côtés intérieurs tournés l'un vers l'autre, une zone de bord de l'une des couches de matériau (21) étant rabattue, pivotée et/ou pliée au moins par zone autour d'une zone de bord de l'autre couche de matériau (23) pour former le collage de bordure (31) et étant collée avec sa face intérieure à la face extérieure de l'autre couche de matériau (23).

15. Coussin gonflable selon l'une quelconque des revendications précédentes,
**caractérisé en ce que**
lorsque le coussin gonflable n'est pas gonflé, l'enveloppe de coussin gonflable (13) déployée présente une forme de base dont la zone de bord est formée exclusivement par des sections (35) droites et/ou légèrement courbées (à l'exception des zones angulaires (37) prévues le cas échéant) au moins dans des zones fermées par un collage de bordure.

16. Coussin gonflable selon l'une quelconque des revendications 4 à 15,
**caractérisé en ce que**
le collage de séparation (19) est conçu de manière à ce que la liaison entre les couches de matériau (21, 23) collées l'une à l'autre se détache en conservant l'étanchéité au gaz de l'enveloppe de coussin gonflable (13) lorsqu'une charge prédéterminable indépendante des conditions de gonflage est dépassée, notamment sans détruire ni endommager les couches de matériau (21, 23).

17. Coussin gonflable selon l'une quelconque des revendications 1 à 16,
**caractérisé en ce que**
le diffuseur de gaz (15) est disposé à proximité du bord.

18. Coussin gonflable selon l'une quelconque des revendications 1 à 17,
**caractérisé en ce que**
le diffuseur de gaz (15) est conçu sous forme de tuyau, de tube ou de canal.

19. Coussin gonflable selon l'une quelconque des revendications 1 à 18,
**caractérisé en ce que**
le diffuseur de gaz (15) est doté d'une pluralité d'orifices de sortie de gaz (39) dont au moins deux débouchent dans la même chambre (11).

20. Module de coussin gonflable pour véhicules automobiles
doté d'au moins un coussin gonflable suivant l'une des revendications précédentes et d'au moins un générateur de gaz (17) pour gonfler le coussin gonflable.
